# EUROPEAN PATENT SPECIFICATION

(11) **EP 1 555 544 B1**
(45) Date of publication and mention of the grant of the patent: **31.03.2010**
(21) Application number: 05075286.4
(22) Date of filing: 13.08.1998
(51) Int. Cl.: G01S 17/42, G01S 17/88, G01C 3/10, A01J 5/017, G01S 17/06, G01S 15/06, G01S 13/06

(54) **A sensor apparatus as well as a method of determining the position of an object in particular a teat of an animal to be milked**
Sensorvorrichtung sowie -verfahren zur Positionsbestimmung eines Objekts, im speziellen einer Zitze eines zu melkenden Tieres
Un dispositif ainsi qu'une méthode de détection d'un objet en particulier du pis d'un animal à traire

(30) Priority: 20.08.1997 NL 1006804
(43) Date of publication of application: 20.07.2005
(62) Divisional of application: 98939019.0
(73) Proprietor: MAASLAND N.V., 3147 PA Maassluis (NL)
(72) Inventor: Fransen, Renatus Ignatius Joséphus, 3135 ZD Vlaardingen (NL); van der Lely, Alexander, 3065 NA Rotterdam (NL)
(74) Representative: Corten, Maurice Jean F.M.

(56) References cited:
- EP-A- 0 360 354
- EP-A- 0 619 502
- EP-A- 0 777 961
- DE-A- 2 208 559
- DE-A1- 19 530 281

## Description

The invention relates to an implement for milking animals according to the preamble of claim 1.

EP-A-0777961 discloses an implement for milking animals comprising a milking parlour including a robot arm for attaching teat cups to the teats of an animal. Two detectors for determining the position of the teats are provided, both with a transmitter element, a receiver and a directional element. The detectors are movable in their own housing fixedly arranged relative to the milking parlour.

It is the object of the invention to provide an alternative implement for milking animals. Therefore, the implement of the above mentioned kind comprises the features of the characterizing portion of claim 1.

The invention also relates to a method of determining the position of a teat.
Figure 1 is a cross-sectional side view of a first embodiment of the sensor apparatus according to the invention;
Figure 2 is a plan view of the apparatus shown in Figure 1;
Figure 3 is a cross-sectional plan view of a sensor apparatus not according to the invention;
Figure 4 is a cross-sectional rear view of the apparatus shown in Figure 3;
Figure 5 is a plan view of an alternative to the embodiment shown in Figure 3;
Figure 6 is a plan view of another alternative to the embodiment shown in Figure 3;
Figure 7 shows the application of the sensor apparatus of Figures 1 and 2 in a milking implement, in plan view and partially showing the inside, and
Figure 8 is a side view of Figure 7.

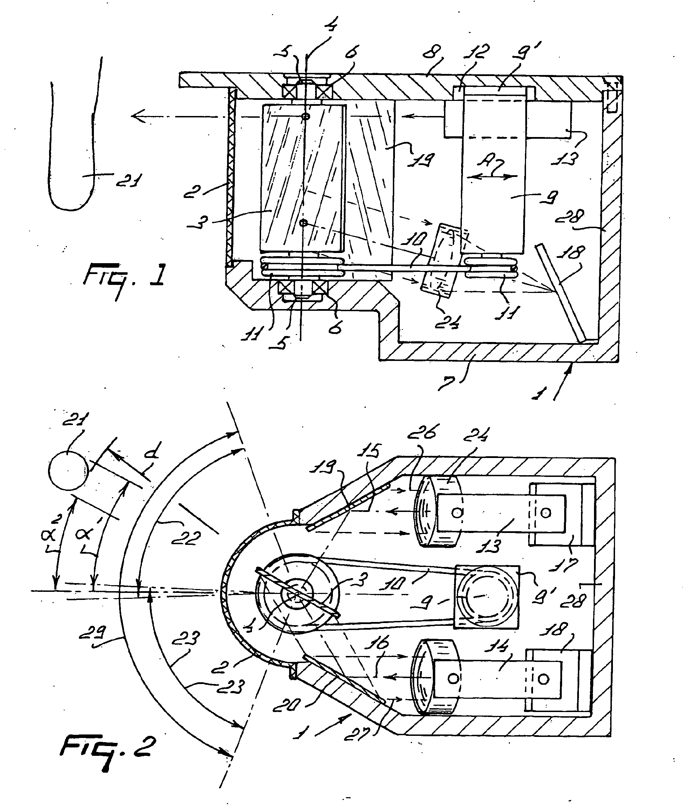

Figures 1, 2, 3 and 4 are to scale. Functionally corresponding parts in the drawings are indicated by the same reference numerals.

The embodiment shown in Figures 1 and 2 comprises a housing 1 having walls made of material which is impenetrable to the relevant ray or beam of rays, such as material which is light-proof to e.g. laser (IR) light, and provided at its front side with an opening or window which is closed by means of a plate, such as a glass plate 2, which is penetrable to the relevant ray or beam of rays. Said plate may also be made e.g. of a suitable synthetic material. The window may be open as well, in which case, however, dust and dirt will easily penetrate into the housing 1 and contaminate same. Behind the plate 2 there is arranged a directional element constituted by a rectangular reflector 3 reflecting at its two principal faces the relevant ray or beam of rays. Alternatively, the directional element may be a light-transmitting one, such as a movable prism or a movable beam of glass fibre cables, or a fixed screen whose refractive index is controllable by e.g. a variable difference in voltage in order to direct a ray or beam of rays in the space. The reflector 3 shown here has a width of approximately 25 mm, a height of approximately 40 mm and a thickness of approximately 1 mm, and its reflection sides are preferably very flat. The reflector 3 is rotatable about its longitudinal central axis 4 and is bearing-supported for that purpose, by means of shafts 5 disposed at its short sides, in bearings 6 in the bottom 7 and the cover 8 of the housing 1. In this embodiment the reflector 3 is driven in rotation via a belt 10 by a drive element designed as an electric motor 9. This belt 10 runs over a pulley 11 which is coupled to the electric motor 9 and to the reflector 3 respectively. The tightening of the endless drive member 10 is adjustable by means of a slidable fastening of the motor 9 to the cover 8, for which purpose the cover 8 has in this case a recess 12 in which is mounted the basis 9' of the motor 9, which basis 9', seen in plan view (Figure 2), has a rectangular shape, and which recess 12, in the direction of the arrow A (Figure 1), is longer than the basis 9' of the motor 9, while, in the direction perpendicular to that according to the arrow A, the size of the recess 12 is such that the basis 9' of the motor is close-fittingly included therein. Alternatively, the reflector 3 may also be driven directly by the drive element 9, so without the intermediary of a drive member 10, for which purpose e.g. one of the shafts 5 is coupled co-axially to the outgoing shaft of the motor 9. Preferably, the reflector 3 rotates continuously in the same direction at least substantially at the same speed, so that its drive is lightly loaded and non-sensitive to wear.

As shown in Figure 2, on both sides of the motor 9 there is arranged each time a transmitter element in the form of a laser diode 13, 14. Straight below each transmitter element 13, 14 there is provided a respective receiver element 17, 18 which is designed in this situation as a so-called CCD. The transmission frequency of both diodes 13, 14 is preferably in the range of 600-900 nm, more preferably in the range of 780-830 nm, the transmission frequencies of the transmitter elements 13, 14 mutually differing to such an extent that no disturbing interference occurs when the rays or beams of rays 15, 16 emanating from the transmitter elements 13, 14 cross one another. Furthermore the frequency difference is such that the sensitivity of a receiver element 17, 18 can reliably be attuned to the ray or beam of rays 15, 16 respectively emanating from the transmitter elements 13, 14 respectively located straight above, in order to avoid interference also in this manner as much as possible. Alternatively, instead of the transmission frequency. the transmission amplitude between the transmitter elements 13, 14 may differ as well. Difference in modulation of the transmitted signals is also possible. Besides, the rays or beams of rays 15, 16 respectively, emanating from the transmitter elements 13, 14, may also be sent through the housing 1 at different levels, so that they strike the directional element 3 in an other range of height, thus avoiding at the same time disturbing interference. Other differences in properties of the two rays or beams of rays 15, 16 are possible for preventing disturbing effects of interference, e.g. by using combinations of two or more of the aforementioned measures.

In this situation the two rays or beams of rays have the directional element 3 in common. Alternatively, there may be applied a separate directional element 3 for each ray or beam of rays, which separate directional element 3 may then pivot in a reciprocating manner through a limited angle of e.g. approximately 75°.

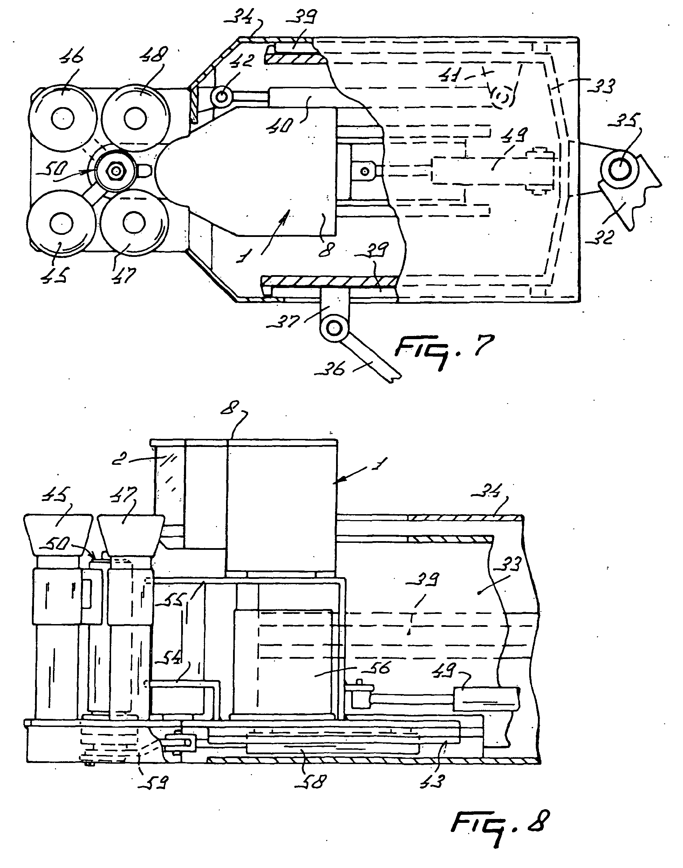

After leaving the respective transmitter element 13, 14, the mutually substantially parallel rays or beams of rays 15, 16 strike a respective deflection element 19, 20 for the purpose of being deflected to the directional element 3 arranged between these deflection elements 19, 20. Each deflection element is constituted here by a reflector 19, 20 enclosing an angle of approximately 30° with the incident ray or beam of rays 15, 16 respectively. Alternatively, a respective prism or beam of glass fibre cables may be used as well. Between each deflection element and the respective receiver element 17, 18 there is arranged a focusing element or converging element, in this embodiment constituted by a lens 24, 25, whose function will be explained hereafter. The directional element is capable of directing each ray or beam of rays 15, 16 through a respective angle sector 22, 23 in the space, e.g. for determining the position of a teat 21 of an animal to be milked in that space. In the present embodiment, the angle of each angle sector 22, 23 amounts to 72° and the angle sectors 22, 23 overlap each other by 2°, so that the total angle area 29 to be scanned in the space amounts to 140°. Due to the fact that each ray or beam of rays 15, 16 is a laser light, the angle sectors are, perpendicular to their plane, at least substantially non-diverging, apart from some dispersed radiation. The radiation of the ray or beam of rays 15, 16 reflected or dispersed from the space is caught as a reflection beam 226, 27 by the directional element 3 and directed to the respective receiver element 17, 18 via the respective deflection element 19, 20. The reflection beam 26, 27 passes the respective lens 24, 25, so that the relatively wide reflection beam 26, 27 is concentrated on a local area of the receiver element. Because of the fact that in this embodiment the lens 24, 25 has a fixed focal distance and is in a fixed position relative to the respective receiver element 17, 18, the place where the teat 21 is depicted on the receiver element 17, 18 and the size of that picture are in relation with the position of the teat 21 in the space. The receiver element 17, 18 supplies a corresponding signal, depending on the nature of the signal and its further processing possibly by intermediary of an analog-to-digital converter, to a (non-shown) evaluation device which may e.g. be constituted by a microprocessor. The principle of scanning the teat 21 with the aid of a ray or beam of rays to be directed consecutively to different areas in the space, and the processing of the signals obtained by means of the sensor apparatus, in particular what is described and shown regarding Figures 7 and 8, are set out in detail in EP-A-0360354, which publication is referred to in the present document. It will be obvious that the description given in said publication applies here to each individual subsector 22, 23. The angles α1 and α2 indicated in Figure 2, which are also indicated in Figure 8 of that publication, may e.g. be determined in an evaluation device (see e.g. Figure 7 in EP-A-0360354) on the basis of the place where the object 21 is depicted on the receiver element 17, 18. The distance d between the object and the sensor apparatus may e.g. be determined in an evaluation device on the basis of the size of the picture of the object on the receiver element 17, 18. By updating the position of the directional element 3, e.g. by coupling the motor 9 to a pulse generator supplying a pulse per section of the revolution, e.g. each 1°, the position of the directional element 3 at the moment when a ray or beam of rays strikes the receiver element 17, and consequently the anglers α1 and α2, may be deduced by simple calculation in e.g. a microprocessor. When the teat 21 is located in the other angle sector 23, the ray or beam of rays will of course emanate from the transmitter element 14 and strike the receiver element 18.

For the purpose of e.g. synchronizing or resetting the directional element 3, one or both rays or beams of rays 15, 16 can be directed such that in a predetermined position of the directional element 3 a ray or beam of rays 15, 16, without leaving the apparatus, retum(s) via the directional element 3 to its respective transmitter element or the other transmitter element 13, 14, so that the relevant transmitter element 13, 14 is influenced, which can e.g. be measured on the basis of variations in the current consumption of the transmitter element 13, 14.

For minimizing interference between the rays or beams of rays 15, 16 emanating from the transmitter elements 13, 14 and the reflection beams 26, 27 emanating from the directional element 3, each transmitter element or all the transmitter elements 13, 14 and the respective receiver element 17, 18, seen in the vertical height of the housing 1 (the direction from the bottom 7 to the cover 8), are spaced apart as much as possible. To that end the reflection beam 26, 27 extends obliquely relative to the surface of the cover 8, and the receiver element 17, 18 is substantially located below the directional element 3. The ray or beam of rays 15, 16 extends substantially parallel to the surface of the cover 8.

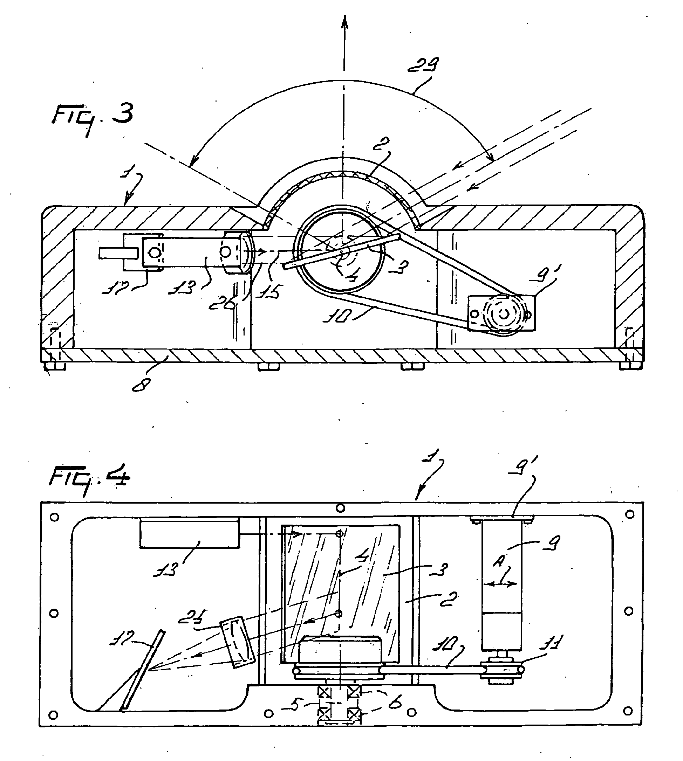

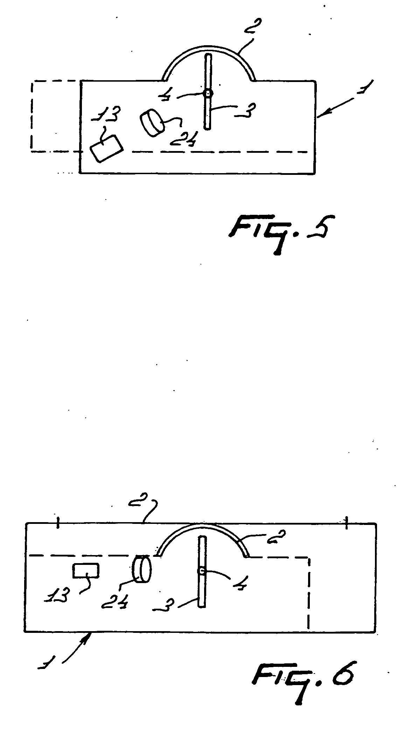

Figures 3 and 4 show a variant not according to the invention, in which only one ray or beam of rays 15 is produced. The housing 1 has a height of 80 mm, a depth of 40 mm and a width of 150 mm. The rear wall 28 is detachable. The directional element 3 is now bearing-supported on one side. The ray or beam of rays 15 emanating from the transmitter element 13 extends at least substantially parallel to the rear wall 28 or, in other words, at least substantially perpendicular to the centre line of the angle area 29, seen in plan view (Figure 3), and falls directly on the directional element 3. By means of this arrangement an angle area 29 of 140° can be covered, however with a considerably larger housing 1 in comparison with Figures 1 and 2. The belt 10 can now be stretched due to the fact that the basis 9' of the motor 9 has slotted holes through which fastening means (screws) are passed, which fastening means are fixed in the upper side 8 of the housing. Figure 5 shows an alternative to the embodiment of Figures 3 and 4, in which the ray or beam of rays 15 and the reflection beam 26 respectively, between the directional element 3 and the transmitter element 13, and the receiver element 17 respectively, enclose an angle of approximately 20° with the front wall. However, the angle area to be covered in the space by the ray or beam of rays is now limited to approximately 120°. In comparison with the housing 1 according to Figures 3 and 4 (imaginarily shown to scale in Figure 5), the housing of the variant according to Figure 5 is smaller and deeper.

In Figures 1, 2, 3, 4 and 5 the glass plate 2 is curved on one side, while the centre of the curvature of the glass plate 2 coincides at least substantially with the axis 4. Consequently, the ray or beam of rays falls at least substantially perpendicularly through the glass plate 2, so that disturbing reflection is avoided as much as possible. Furthermore, the housing 1 can be as compact as possible for a given volume of the area to be covered by means of the rays or beams of rays 15, 16. Figure 6 shows schematically an embodiment having a flat glass plate 2, for the purpose of clearly explaining the difference in size of the housing 1 when the latter has a curved, respectively a flat glass plate 2, in one and the same angle scanning. The front side and the lateral side of the housing 1 having a curved glass plate 2 is shown imaginarily. It is noticed that the flat closing means 2 for the window letting through the ray or beam of rays belongs to the inventive idea.

Because of its limited dimensions, great scanning angle, long life, low cost and fast and accurate function, the sensor apparatus according to the invention is particularly suitable for being used in a milking implement. By way of example, there is shown how the sensor apparatus 1 may be incorporated in the milking implements set out and shown in EP-A-0360354, for which purpose Figures 4 and 5 of that publication are copied here as Figures 7 and 8. Apart from the parts designated by the reference numerals 51, 52, 53 and 57, Figures 7 and 8 are an accurate copy of Figures 4, 5 respectively from EP-A-0360354. The sensor apparatus according to the invention is now indicated in Figures 7 and 8 by the reference numeral 51. The other reference numerals correspond to EP-A-0360354 and for their meaning and function reference is made to said publication. It has also to be understood clearly that Figures 1 to 3 of EP-A-0360354 and the corresponding description show how the detail of Figures 7 and 8 of this application may be incorporated in the milking implement.

In the foregoing the invention has been set out on the basis of a number of preferred embodiments while applying laser beams. To alternative rays belong sound (e.g. ultrasonic sound or audible sound) or visible light or radio or radar waves. The two or more separate, preferably parallel rays or beams of rays may also be produced by means of one single transmitter in which case e.g. the beam is divided by means of a prism or the beam is passed in a glass fibre cable, whereafter that cable is split up. The difference in property between the rays or beams of rays may also be obtained e.g. by using for one or both rays or beams of rays a respective band-pass filter, so that after passing the filter the property differs per ray or per beam of rays. By means of the directional element, a ray or beam of rays is moved through the space to be scanned.

Although a ray or beam of rays produced by the transmitter element is preferred, most preferably laser beams, in specific embodiments it is also possible to utilize e.g. a strongly diverging beam of rays, e.g. a beam of rays covering the entire space to be scanned in one time. The ray or beam of rays may be polarized or non-polarized.

According to a further variant there is aimed at adapting the intensity of the ray or beam of rays transmitted by the sensor and/or the sensitivity of the receiver element and/or the quantity of the ray or beam of rays supplied to the receiver element to the nature of the object whose position has to be determined. This principle is based on the one hand on the insight that the intensity of the signal and the sensitivity of the receiver element have to be adapted to each other in order to avoid e.g. "overradiating" of the receiver element. On the other hand this principle is based on the insight that the intensity of the signal has to be adapted to the directing velocity of the directional element in order to avoid e.g. loss of diffusion width laser light. In the case of this variant, if there is decided to adjust the intensity of the transmitted ray or beam of rays depending on the nature of an object (e.g. the colour in case of a teat), it is possible to adapt the directing velocity of a directional element 3 (e.g. the rotating movement thereof) accordingly, so that e.g. the more the scanning velocity is high, the more the ray or beam of rays is intense and consequently the rotation speed of the mirror 3 is high. Controlling the intensity of the signal to be supplied to the receiver element is e.g. possible by means of an attenuation element arranged between the receiver element and the reflector.

## Claims

1. An implement for milking animals, such as cows, comprising at least one milking parlour provided with at least one milking robot for automatically connecting teat cups to the teats of an animal to be milked and a search device for determining the position of a teat (21) relative to a teat cup, said search device comprising a sensor apparatus for determining the position of the teat (21) of the animal to be milked present in a space, relative to the sensor apparatus, which sensor apparatus is provided with a first and a second transmitter element (13, 14), and a first and a second receiver element (17, 18) which are designed to receive a ray or beam of rays (26, 27) reflected by the teat being in a random position in the space to the receiver elements (17, 18), as well as at least one first directional element (3), for directing the rays or beams of rays emanating from the transmitter elements (13, 14) consecutively to different areas in that space and/or for directing the rays or beams of rays emanating from the teat to the receiver elements, **characterized in that**, the transmitter elements (13, 14), the receiver elements (17, 18) and the first directional element (3) are accommodated in a housing (1) provided with a window for passing the rays or beams of rays emanating from the transmitter elements (13, 14) and/or the rays or beams of rays emanating from the teat (21), and **in that** the first directional element (3) is designed to scan the space while the transmitter elements (13, 14) are at least substantially fixedly arranged with respect to the housing (1).

2. An implement for milking animals as claimed in claim 1 **characterized in that**, the rays or beams of rays (15, 16) respectively, emanating from the transmitter elements (13, 14) are sent through the housing (1) at different levels, so that they strike the first directional element (3) in an other range of height, thus avoiding at the same time disturbing interference.

3. An implement for milking animals as claimed in claim 1 or 2, **characterized in that** the sensor apparatus further comprises an evaluation device designed to receive a signal emanating from the receiver element and containing information concerning the area where the ray or beam of rays strikes the receiver element and which signal is used by the evaluation device for determining by means of the evaluation device the position of the sensor apparatus (α1, α2, d) relative to that teat.

4. An implement for milking animals as claimed in claim 1, 2 or 3, **characterized in that** there is provided a second directional element which is designed to transmit a ray or beam of rays reflected and/or dispersed from a teat being in a random position in the space to the receiver element.

5. An implement for milking animals as claimed in claim 4, **characterized in that** the first and the second directional element are arranged in the path of the ray or beam of rays between the teat and the transmitter element and/or the receiver element.

6. An implement for milking animals as claimed in any one of the preceding claims, **characterized in that** the first directional element is constituted by a radiation reflection element which, preferably at two sides and more preferably at two opposite sides, has a reflective function.

7. An implement for milking animals as claimed in any one of the preceding claims, **characterized in that** the first directional element is pivotable or rotatable about an axis extending parallel to its plane.

8. An implement for milking animals as claimed in any one of the preceding claims, **characterized in that** the window is closed by means of a cover plate (2) made of material which is penetrable to that ray or beam of rays, and that this cover plate is at least curved on one side.

9. An implement for milking animals as claimed in claim 8, **characterized in that** the centre of curvature of the cover plate and the pivotal axis or the axis of rotation of the first and/or the second directional element coincide at least substantially.

10. An implement for milking animals as claimed in any one of the preceding claims, **characterized in that** the transmitter element and/or the receiver element are/is directly directed to the directional element.

11. An implement for milking animals as claimed in any one of the preceding claims, **characterized in that** in the path to be followed by the ray or beam of rays emanating from the teat between the receiver element and the directional element there are arranged one or more focusing elements (24, 25), such as lenses.

12. An implement for milking animals as claimed in claim 11, **characterized in that** of at least one of the focusing elements the focal distance is fixed relative to the receiver element.

13. An implement for milking animals as claimed in any one of the preceding claims, **characterized in that** the transmitter element is suitable for producing a laser beam.

14. An implement for milking animals as claimed in any one of the preceding claims, **characterized in that** the receiver element is constituted by a diode sensor.

15. An implement for milking animals as claimed in any one of claims 3 to 14, **characterized in that** the receiver element comprises a unidimensional or two-dimensional range of detector elements adjacent to each other, which detector elements are all sensitive to the respective radiation and, when being exposed to that radiation, supply a detection signal corresponding to the intensity of that radiation, which is the signal to be supplied to the evaluation device or serves as a basis therefor, said receiver element being constituted in particular by a so-called CCD.

16. An implement for milking animals as claimed in any one of the preceding claims, **characterized in that** the sensor apparatus comprises a housing having a width, depth and height each amounting to approximately 100 mm.

17. An implement for milking animals as claimed in any one of the preceding claims, **characterized in that** the sensor apparatus has for the at least first directional element a double-sided mirror which is rotatable about the longitudinal central axis of said sensor apparatus and whose width amounts to approximately 25 mm.

18. An implement for milking animals as claimed in any one of the preceding claims, **characterized in that** the sensor apparatus comprises means for adjusting the intensity of the ray or beam of rays to be supplied by the apparatus and/or adjusting the intensity of the ray or beam of rays received from the teat and to be transmitted to the receiver element.

19. An implement for milking animals as claimed in any one of the preceding claims, **characterized in that** this sensor apparatus comprises means for adjusting the directing velocity of the directional element.

20. A method for determining the position of a teat present in a space, while using a sensor apparatus, said sensor apparatus comprising a first and a second transmitter element designed to transmit a ray or beam of rays; a first and a second receiver element designed to receive the ray or beam of rays reflected and/or dispersed by said teat; an evaluation device designed to receive a signal emanating from the receiver elements and containing information concerning the area where the rays or beams of rays strikes the receiver elements; and a first directional element for directing the rays or beams of rays emanating from the transmitter elements in that space, the rays or beams of rays being directed by means of the first directional element consecutively to different areas in that space and the signal being used by the evaluation device for determining by means of the evaluation device the position of the sensor apparatus relative to the teat, **characterized in that** the transmitter elements, the receiver element and the first directional element are accommodated in a housing (1) provided with a window for passing the rays or beams of rays emanating from the transmitter elements (13, 14) and/or the rays or beams of rays emanating from the teat, and that, while using transmitter elements substantially fixedly arranged in the housing (1), the rays or beams of rays are directed by said directional element consecutively to those different areas **in that** space and by the same or another directional element the rays or beams of rays emanating from the teat are received by the sensor apparatus.

21. A method as claimed in claim 20, **characterized in that** by means of the ray or beam of rays a substantially two-dimensional area is scanned.

22. A method as claimed in claim 21, **characterized in that** the area is an angle sector, broadening from the apparatus, of at least approximately 100°, preferably of approximately 120° or 140°.

## Patentansprüche

1. Vorrichtung zum Melken von Tieren wie Kühe, umfassend wenigstens einen Melkstand, welcher mit wenigstens einem Melkroboter zum automatischen Verbinden der Zitzenbecher mit den Zitzen eines zu melkenden Tieres ausgestattet ist, und eine Suchvorrichtung zum Bestimmen der Position einer Zitze (21) relativ zu einem Zitzenbecher, wobei die Suchvorrichtung ein Sensorgerät zum Bestimmen der Position der Zitze (21) des zu melkenden Tieres in einem Raum relativ zum Sensorgerät umfasst, wobei das Sensorgerät mit einem ersten und einem zweiten Sendeelement (13, 14) ausgestattet ist und mit einem ersten und einem zweiten Empfangselement (17, 18), welche geeignet sind, einen von der Zitze, welche sich in einer beliebigen Position im Raum zu den Empfangselementen (17, 18) befindet, zurückgeworfenen Strahl oder ein Strahlenbündel (26, 27) zu empfangen, sowie mit einem ersten Richtungselement (3) zum Lenken der von den Sendeelementen (13, 14) ausgehenden Strahlen oder Strahlenbündel, aufeinander folgend in unterschiedliche Bereiche in dem Raum und/oder zum Lenken der von der Zitze zu den Empfangselementen ausgehenden Strahlen oder Strahlenbündel,
**dadurch gekennzeichnet, dass** die Sendeelemente (13, 14), die Empfangselemente (17, 18) und das erste Richtungselement (3) in einem Gehäuse (1) angeordnet sind, welches mit einem Fenster zum Durchtreten der Strahlen oder Strahlenbündel, welche von den Sendeelementen (13, 14) ausgehen, und/oder der Strahlen oder Strahlenbündel, welche von der Zitze (21) ausgehen, versehen ist, und dass das erste Richtungselement (3) so gestaltet ist, um den Raum abzutasten, während die Sendeelemente (13, 14) wenigstens im Wesentlichen feststehend in Bezug auf das Gehäuse (1) angeordnet sind.

2. Vorrichtung zum Melken von Tieren nach Anspruch 1,
**dadurch gekennzeichnet, dass** die von den Sendeelementen (13, 14) ausgehenden Strahlen oder beziehungsweise Strahlenbündel (15, 16) auf unterschiedlichen Ebenen durch das Gehäuse (1) gesendet werden, so dass sie am ersten Richtungselement (3) in einem anderen Höhenbereich auftreffen, wodurch gleichzeitig störende Interferenz vermieden wird.

3. Vorrichtung zum Melken von Tieren nach Anspruch 1 oder 2,
**dadurch gekennzeichnet, dass** das Sensorgerät des Weiteren ein Auswertungsgerät umfasst, welches so ausgelegt ist, um ein Signal zu empfangen, das vom Empfangselement ausgeht und Information in Bezug auf die Fläche enthält, wo der Strahl oder das Strahlenbündel auf das Empfangselement trifft, und wobei dieses Signal durch das Auswertungsgerät zum Bestimmen der Position des Sensorgeräts (α1, α2, d) relativ zu dieser Zitze mittels des Auswertungsgeräts verwendet wird.

4. Vorrichtung zum Melken von Tieren nach Anspruch 1, 2 oder 3,
**dadurch gekennzeichnet, dass** ein zweites Richtungselement vorgesehen ist, welches geeignet ist, einen von einer sich in einer beliebigen Lage im Raum befindenden Zitze reflektierten und/oder zerstreuten Strahl oder Strahlenbündel zum Empfangselement zu übertragen.

5. Vorrichtung zum Melken von Tieren nach Anspruch 4,
**dadurch gekennzeichnet, dass** das erste und das zweite Richtungselement im Gang des Strahls oder Strahlenbündels zwischen der Zitze und dem Sendeelement und/oder dem Empfangselement angeordnet sind.

6. Vorrichtung zum Melken von Tieren nach einem der vorhergehenden Ansprüche,
**dadurch gekennzeichnet, dass** das erste Richtungselement durch einen Strahlungsreflektor gebildet ist, welcher vorzugsweise an zwei Seiten und besser noch an zwei gegenüberliegenden Seiten eine reflektierende Funktion aufweist.

7. Vorrichtung zum Melken von Tieren nach einem der vorhergehenden Ansprüche,
**dadurch gekennzeichnet, dass** das erste Richtungselement schwenkbar oder drehbar um eine Achse ist, welche sich parallel zu seiner Ebene erstreckt.

8. Vorrichtung zum Melken von Tieren nach einem der vorhergehenden Ansprüche,
**dadurch gekennzeichnet, dass** das Fenster mittels einer Abdeckplatte (2) verschlossen wird, welche aus einem für den Strahl oder für das Strahlenbündel durchdringbaren Material besteht, und dass die Abdeckplatte wenigstens auf einer Seite gekrümmt ist.

9. Vorrichtung zum Melken von Tieren nach Anspruch 8,
**dadurch gekennzeichnet, dass** der Mittelpunkt der Krümmung der Abdeckplatte und die Schwenkachse oder die Drehachse des ersten und/oder des zweiten Richtungselements wenigstens im Wesentlichen zusammenfallen.

10. Vorrichtung zum Melken von Tieren nach einem der vorhergehenden Ansprüche,
**dadurch gekennzeichnet, dass** das Sendeelement und/oder das Empfangselement direkt auf das Richtungselement gerichtet sind/ist.

11. Vorrichtung zum Melken von Tieren nach einem der vorhergehenden Ansprüche,
**dadurch gekennzeichnet, dass** im vom Strahl oder dem Strahlenbündel verfolgten Gang, ausgehend von der Zitze, zwischen dem Empfangselement und dem Richtungselement ein oder mehrere Fokussierelemente (24, 25) wie Linsen angeordnet sind.

12. Vorrichtung zum Melken von Tieren nach Anspruch 11,
**dadurch gekennzeichnet, dass** die Brennweite des wenigstens einen Fokussierelements relativ zum Empfangselement feststehend ist.

13. Vorrichtung zum Melken von Tieren nach einem der vorhergehenden Ansprüche,
**dadurch gekennzeichnet, dass** das Sendeelement zum Erzeugen eines Laserstrahls geeignet ist.

14. Vorrichtung zum Melken von Tieren nach einem der vorhergehenden Ansprüche,
**dadurch gekennzeichnet, dass** das Empfangselement ein Diodensensor ist.

15. Vorrichtung zum Melken von Tieren nach einem der Ansprüche 3 bis 14,
**dadurch gekennzeichnet, dass** das Empfangselement eine eindimensionale oder zweidimensionale Reihe von Detektorelementen benachbart zueinander umfasst, wobei alle Detektorelemente für die jeweilige Strahlung empfindlich sind und, wenn sie der Strahlung ausgesetzt sind, ein Erfassungssignal liefern, welches der Intensität jener Strahlung entspricht, das dann das Signal darstellt, welches dem Auswertungsgerät zugeführt wird, oder das als Grundlage dafür dient, wobei das Empfangselement im Besonderen aus einem so genannten CCD gebildet ist.

16. Vorrichtung zum Melken von Tieren nach einem der vorhergehenden Ansprüche,
**dadurch gekennzeichnet, dass** das Sensorgerät ein Gehäuse umfasst, welches eine Breite, Tiefe und Höhe aufweist, von denen jede jeweils ungefähr 100 mm beträgt.

17. Vorrichtung zum Melken von Tieren nach einem der vorhergehenden Ansprüche,
**dadurch gekennzeichnet, dass** das Sensorgerät als wenigstens erstes Richtungselement einen doppelseitigen Spiegel aufweist, welcher drehbar um die Längsmittelachse des Sensorgeräts ist und dessen Breite ungefähr 25 mm beträgt.

18. Vorrichtung zum Melken von Tieren nach einem der vorhergehenden Ansprüche,
**dadurch gekennzeichnet, dass** das Sensorgerät Mittel zum Einstellen der Intensität des durch das Gerät gelieferten Strahls oder Strahlenbündels und/oder zum Einstellen der Intensität des von der Zitze empfangenen und an das Empfangselement gesendeten Strahls oder Strahlenbündels umfasst.

19. Vorrichtung zum Melken von Tieren nach einem der vorhergehenden Ansprüche,
**dadurch gekennzeichnet, dass** dieses Sensorgerät Mittel zum Einstellen der Ausrichtungsgeschwindigkeit des Richtungselements umfasst.

20. Verfahren zum Bestimmen der Position einer in einem Raum befindlichen Zitze, unter Verwendung eines Sensorgeräts, wobei das Sensorgerät ein erstes und ein zweites Sendeelement zum Senden eines Strahls oder eines Strahlenbündels umfasst, mit einem ersten und einem zweiten Empfangselement, welche zum Empfangen eines Strahls oder Strahlenbündels gestaltet sind, der/das durch die Zitze zurückgeworfen und/oder zerstreut wird, mit einem derart gestalteten Auswertungsgerät, um ein Signal zu empfangen, welches von den Empfangselementen ausgeht und Informationen enthält, die die Fläche betreffen, wo die Strahlen oder Strahlenbündel auf den Empfangselementen auftreffen, und mit einem ersten Richtungselement zum Lenken der Strahlen oder Strahlenbündel, welche von den Sendeelementen in dem Raum ausgehen, wobei die Strahlen oder Strahlenbündel mittels des ersten Richtungselements aufeinanderfolgend in unterschiedliche Bereiche in dem Raum gerichtet werden und wobei das Signal vom Auswertungsgerät zum Bestimmen der Position des Sensorgeräts relativ zur Zitze mittels des Auswertungsgeräts verwendet wird,
**dadurch gekennzeichnet, dass** die Sendeelemente, das Empfangselement und das erste Richtungselement in einem Gehäuse (1) angeordnet sind, das mit einem Fenster zum Durchtreten der Strahlen oder Strahlenbündel, welche von den Sendeelementen (13, 14) ausgehen, und/oder der Strahlen oder Strahlenbündel, welche von der Zitze ausgehen, ausgestattet ist, und dass unter Verwendung von Sendeelementen, welche im Wesentlichen feststehend im Gehäuse (1) angeordnet sind, die Strahlen oder Strahlenbündel durch das Richtungselement aufeinanderfolgend auf die unterschiedlichen Bereiche in dem Raum gerichtet werden und dass durch das gleiche oder ein anderes Richtungselement die Strahlen oder Strahlenbündel, welche von der Zitze ausgehen, durch das Sensorgerät empfangen werden.

21. Verfahren nach Anspruch 20,
**dadurch gekennzeichnet, dass** mittels des Strahls oder Strahlenbündels ein im Wesentlichen zweidimensionaler Bereich abgetastet wird.

22. Verfahren nach Anspruch 21,
**dadurch gekennzeichnet, dass** der Bereich ein Winkelsektor, welcher sich vom Gerät aus ausbreitet, von wenigstens ungefähr 100°, vorzugsweise von ungefähr 120° oder 140° ist.

## Revendications

1. Instrument de traite d'animaux, tels que des vaches, comprenant au moins une salle de traite pourvue d'au moins un robot de traite destiné à accoupler automatiquement des gobelets trayeurs avec les trayons d'un animal destiné à être trait et un dispositif de recherche destiné à déterminer la position d'un trayon (21) par rapport à un gobelet trayeur, ledit dispositif de recherche comprenant un appareil de détection destiné à déterminer la position du trayon (21) de l'animal destiné à être trait présent dans un espace, par rapport à l'appareil de détection, lequel appareil de détection est pourvu de premier et second éléments émetteurs (13, 14), et de premier et second éléments récepteurs (17, 18) qui sont conçus pour recevoir un rayon ou faisceau de rayons (26, 27) réfléchi par le trayon dans une position aléatoire dans l'espace vers les éléments récepteurs (17, 18), ainsi qu'au moins un premier élément directionnel (3), destiné à diriger les rayons ou faisceaux de rayons provenant des éléments émetteurs (13, 14) consécutivement vers des zones différentes dans cet espace et/ou destiné à diriger les rayons ou faisceaux de rayons provenant du trayon vers les éléments récepteurs, **caractérisé en ce que** les éléments émetteurs (13, 14), les éléments récepteurs (17, 18) et le premier élément directionnel (3) sont logés dans un logement (1) pourvu d'une fenêtre pour faire passer les rayons ou faisceaux de rayons provenant des éléments émetteurs (13, 14) et/ou les rayons ou faisceaux de rayons provenant du trayon (21), et **en ce que** le premier élément directionnel (3) est conçu pour balayer l'espace alors que les éléments émetteurs (13, 14) sont agencés au moins de façon sensiblement fixe par rapport au logement (1).

2. Instrument de traite d'animaux selon la revendication 1, **caractérisé en ce que** les rayons ou faisceaux de rayons (15, 16), respectivement, provenant des éléments émetteurs (13, 14), sont envoyés à travers le logement (1) à des niveaux différents, de sorte qu'ils atteignent le premier élément directionnel (3) dans une autre plage de hauteur, évitant ainsi en même temps une interférence perturbante.

3. Instrument de traite d'animaux selon la revendication 1 ou 2, **caractérisé en ce que** l'appareil de détection comprend en outre un dispositif d'évaluation conçu pour recevoir un signal provenant de l'élément récepteur et contenant des informations concernant la zone où le rayon ou faisceau de rayons atteint l'élément récepteur et lequel signal est utilisé par le dispositif d'évaluation pour déterminer, au moyen du dispositif d'évaluation, la position de l'appareil de détection (□1, □2, d) par rapport à ce trayon.

4. Instrument de traite d'animaux selon la revendication 1, 2 ou 3, **caractérisé en ce qu'**un second élément directionnel est prévu qui est conçu pour transmettre un rayon ou faisceau de rayons réfléchi et/ou dispersé à partir d'un trayon dans une position aléatoire dans l'espace vers l'élément récepteur.

5. Instrument de traite d'animaux selon la revendication 4, **caractérisé en ce que** les premier et second éléments directionnels sont agencés dans le trajet du rayon ou faisceau de rayons entre le trayon et l'élément émetteur et/ou l'élément récepteur.

6. Instrument de traite d'animaux selon l'une quelconque des revendications précédentes, **caractérisé en ce que** le premier élément directionnel est constitué par un élément de réflexion de rayonnement qui, de préférence sur deux côtés et idéalement sur deux côtés opposés, possède une fonction réfléchissante.

7. Instrument de traite d'animaux selon l'une quelconque des revendications précédentes, **caractérisé en ce que** le premier élément directionnel peut pivoter ou tourner autour d'un axe s'étendant parallèlement à son plan.

8. Instrument de traite d'animaux selon l'une quelconque des revendications précédentes, **caractérisé en ce que** la fenêtre est fermée au moyen d'une plaque couvercle (2) faite de matériau qui peut être pénétré par ce rayon ou faisceau de rayons, et que cette plaque couvercle est au moins incurvée sur un côté.

9. Instrument de traite d'animaux selon la revendication 8, **caractérisé en ce que** le centre de courbure de la plaque couvercle et l'axe de pivotement ou l'axe de rotation des premier et/ou second éléments directionnels coïncident au moins sensiblement.

10. Instrument de traite d'animaux selon l'une quelconque des revendications précédentes, **caractérisé en ce que** l'élément émetteur et/ou l'élément récepteur sont/est dirigé(s) directement vers l'élément directionnel.

11. Instrument de traite d'animaux selon l'une quelconque des revendications précédentes, **caractérisé en ce que**, dans le trajet destiné à être suivi par le rayon ou faisceau de rayons provenant du trayon entre l'élément récepteur et l'élément directionnel, sont agencés un ou plusieurs éléments concentrateurs (24, 25), tels que des lentilles.

12. Instrument de traite d'animaux selon la revendication 11, **caractérisé en ce que** la distance focale d'au moins un des éléments concentrateurs est fixe par rapport à l'élément récepteur.

13. Instrument de traite d'animaux selon l'une quelconque des revendications précédentes, **caractérisé en ce que** l'élément émetteur est approprié pour produire un faisceau laser.

14. Instrument de traite d'animaux selon l'une quelconque des revendications précédentes, **caractérisé en ce que** l'élément récepteur est constitué par un capteur à diode.

15. Instrument de traite d'animaux selon l'une quelconque des revendications 3 à 14, **caractérisé en ce que** l'élément récepteur comprend une gamme unidimensionnelle ou bidimensionnelle d'éléments détecteurs adjacents les uns aux autres, lesquels éléments détecteurs sont tous sensibles à un rayonnement respectif et, lorsqu'ils sont exposés à ce rayonnement, fournissent un signal de détection correspondant à l'intensité de ce rayonnement, qui est le signal destiné à être fourni au dispositif d'évaluation ou sert de base pour celui-ci, ledit élément récepteur étant constitué en particulier par un élément appelé CCD.

16. Instrument de traite d'animaux selon une quelconque des revendications précédentes, **caractérisé en ce que** l'appareil de détection comprend un logement possédant une largeur, une profondeur et une hauteur chacune mesurant approximativement 100 mm.

17. Instrument de traite d'animaux selon une quelconque des revendications précédentes, **caractérisé en ce que** l'appareil de détection possède, au moins pour le premier élément directionnel, un miroir double face qui est rotatif autour de l'axe central longitudinal dudit appareil de détection et dont la largeur mesure approximativement 25 mm.

18. Instrument de traite d'animaux selon l'une quelconque des revendications précédentes, **caractérisé en ce que** l'appareil de détection comprend des moyens destinés à régler l'intensité du rayon ou faisceau de rayons destiné à être fourni par l'appareil et/ou régler l'intensité du rayon ou faisceau de rayons reçu à partir du trayon et destiné à être émis vers l'élément récepteur.

19. Instrument de traite d'animaux selon l'une quelconque des revendications précédentes, **caractérisé en ce que** cet appareil de détection comprend des moyens destinés à régler la vitesse directionnelle de l'élément directionnel.

20. Procédé pour déterminer la position d'un trayon présent dans un espace, tout en utilisant un appareil de détection, ledit appareil de détection comprenant des premier et second éléments émetteurs conçus pour transmettre un rayon ou faisceau de rayons ; des premier et second éléments récepteurs conçus pour recevoir le rayon ou faisceau de rayons réfléchi et/ou dispersé par ledit trayon ; un dispositif d'évaluation conçu pour recevoir un signal provenant des éléments récepteurs et contenant des informations concernant la zone où les rayons ou faisceaux de rayons atteignent les éléments récepteurs ; et un premier élément directionnel destiné à diriger les rayons ou faisceaux de rayons provenant des éléments émetteurs dans cet espace, les rayons ou faisceaux de rayons étant dirigés au moyen du premier élément directionnel consécutivement vers des zones différentes dans cet espace et le signal étant utilisé par le dispositif d'évaluation pour déterminer, au moyen du dispositif d'évaluation, la position de l'appareil de détection par rapport au trayon, **caractérisé en ce que** les éléments émetteurs, l'élément récepteur et le premier élément directionnel sont logés dans un logement (1) pourvu d'une fenêtre pour faire passer les rayons ou faisceaux de rayons provenant des éléments émetteurs (13, 14) et/ou les rayons ou faisceaux de rayons provenant du trayon, et que, tout en utilisant des éléments émetteurs agencés de façon sensiblement fixe dans le logement (1), les rayons ou faisceaux de rayons sont dirigés par ledit élément directionnel consécutivement vers ces zones différentes dans cet espace et, par le même ou un autre élément directionnel, les rayons ou faisceaux de rayons provenant du trayon sont reçus par l'appareil de détection.

21. Procédé selon la revendication 20, **caractérisé en ce que**, au moyen du rayon ou faisceau de rayons, une zone sensiblement bidimensionnelle est balayée.

22. Procédé selon la revendication 21, **caractérisé en ce que** la zone est un secteur d'angle, s'élargissant à partir de l'appareil, d'au moins approximativement 100°, de préférence d'approximativement 120° ou 140°.
